# EUROPÄISCHE PATENTSCHRIFT

(11) **EP 1 175 598 B1**
(45) Veröffentlichungstag und Bekanntmachung des Hinweises auf die Patenterteilung: **22.09.2004**
(21) Anmeldenummer: 00927017.4
(22) Anmeldetag: 20.04.2000
(51) Int. Cl.: G01D 5/245, G01D 5/244

(54) **VERFAHREN UND VORRICHTUNG ZUR BESTIMMUNG DER TATSÄCHLICHEN DREHRICHTUNGSUMKEHR EINES NACHLAUFENDEN DREHANTRIEBES**
METHOD AND DEVICE FOR DETERMINING THE ACTUAL REVERSAL OF A FOLLOW-ON ROTARY DRIVE
PROCEDE ET DISPOSITIF DE DETERMINATION DE L'INVERSION EFFECTIVE DU SENS DE ROTATION D'UN DISPOSITIF D'ENTRAINEMENT EN ROTATION A SUIVI DE POSITION

(30) Priorität: 05.05.1999 EP 99108921
(43) Veröffentlichungstag der Anmeldung: 30.01.2002
(73) Patentinhaber: SIEMENS AKTIENGESELLSCHAFT, 80333 München (DE)
(72) Erfinder: PREYMANN, Leonard, A-1230 Wien (AT)
(86) Internationale Anmeldenummer: PCT/EP2000/003632
(87) Internationale Veröffentlichungsnummer: WO 2000/068644

(56) Entgegenhaltungen:
- EP-A- 0 469 318

## Beschreibung

Die Erfindung bezieht sich auf ein Verfahren zur inkremementalen Bestimmung der tatsächlichen Drehrichtungsumkehr eines nach vorhergehender Drehrichtungsumschaltung nachlaufenden Drehantriebes gemäß Patentanspruch 1 sowie auf eine Vorrichtung zur Durchführung des Verfahrens gemäß Patentanspruch 7.

Verfahren bzw. Vorrichtungen der vorgenannten Art werden z.B. bei Stellantrieben als Information für die Position eines von dem Stellantrieb bewegten Verstellteiles benötigt; bevorzugte Anwendungsbeispiele sind motorische Fensterheber- bzw. Schiebedachantriebe in Kraftfahrzeugen, insbesondere bei Ausrüstung mit einer schnell reagierenden und hohen Sicherheitsanforderungen entsprechenden Schließkraftbegrenzung.

Zur Ermittlung der jeweiligen Öffnungs- bzw. Schließposition und Drehrichtung eines durch den Drehantrieb angetriebenen Kraftfahrzeug-Schließteils werden, in z.B. aus der DE 42 33 549 A1 bekannter Art, üblicherweise Inkremental-Gebersysteme mit einem rotorseitigen Geberrad, insbesondere einem asymmetrischen Magnetrad, z.B. auf der Welle des Ankers eines den Stellantrieb antreibenden Elektromotors, und statorseitig mit zumindest einem die Signale des rotierenden Geberrades detektierenden Sensor, insbesondere einem Hallsensor, verwendet. Das Geberrad erzeugt bei Drehung aufgrund des Zahn- bzw. Polwechsels in dem statorseitigen Sensor, gegebenenfalls nach entsprechender Signalaufbereitung, ein im wesentlichen rechteckförmiges, auch drehrichtungscodierbares, Pulssignal mit flankenseitig begrenzenden High-Signalen bzw. Low-Signalen.

Bei Einklemmerkennung wird zur Schließkraftbegrenzung, in z.B. aus der DE 43 16 898 C2 bekannter Art, der Motor des Stellantriebes durch Umpolen seiner Speisespannung zur Drehrichtungsumkehr veranlasst. Aufgrund elektrisch induktiver und/oder mechanischer Trägheit erfolgt die tatsächliche mechanische Drehrichtungsumkehr mit einer gewissen zeitlichen Verzögerung gegenüber der eigentlichen Drehrichtungsumschaltung durch Umpolen der Speisespannung. Der Zeitpunkt und die Position der tatsächlichen Drehrichtungsumkehr ist also nicht mit dem Zeitpunkt der Spannungsumkehrung identisch und kann bei Fehlen eines statorseitigen zweiten, gegenüber einem statorseitigen ersten Sensor umfangsversetzten Sensor auch nicht aus einem Phasenvergleich der sensierten Flankensignale der beiden Sensoren ermittelt werden.

Gemäß Aufgabe vorliegender Erfindung soll mit geringem fertigungs- bzw. meßtechnischem Bauteile-Aufwand, insbesondere unter Verwendung nur eines statorseitigen Sensors, die tatsächliche mechanische Drehrichtungsumkehr nach einer Drehrichtungsumschaltung detektierbar und der jeweiligen Position des von dem Drehantrieb bewegten Verstellteils der entsprechende richtige Pulssignalzählwert zuordbar sein, so daß dieser mit einem für den gesamten Hubweg abgespeicherten Pulszählwert-Referenzmuster, z.B. im Sinne einer gewährleisteten Schließstellung, koordinierbar ist.

Die Lösung dieser Erfindung gelingt durch ein Verfahren gemäß Patentanspruch 1 sowie eine Vorrichtung zur Durchführung dieses Verfahrens gemäß Patentanspruch 7; vorteilhafte Ausführungsbeispiele des Verfahrens sind Gegenstand der Ansprüche 2 bis 6 und vorteilhafte Ausgestaltungen der Vorrichtung sind Gegenstand der Ansprüche 8 bis 10.

Aufgrund des erfindungsgemäßen Verfahrens ist nach einer Drehrichtungsumschaltung die Zahl der Pole bzw. die Zahl der Pulssignale zwischen zwei nacheinander an dem einzigen statorseitigen Sensor vorbeirotierenden Referenzsignale zählbar, wobei das erste Referenzsignal noch der vorherigen einen Drehrichtung und das folgende Referenzsignal aufgrund der zwischenliegenden tatsächlichen Drehrichtungsumkehr der anschließenden anderen Drehrichtung zuzuordnen ist; wird nun die Zahl der in diesem Zeitraum gezählten Pulssignale von dem an sich falschen, bei Induktion durch das zweite Referenzsignals gebildeten aufaddierten Gesamt-Pulssignalzählwert als Korrekturwert subtrahiert, ergibt sich der korrekte tatsächliche, der augenblicklichen Position des von dem Drehantrieb bewegten Verstellteils, insbesondere der Kraftfahrzeug-Fensterscheibe bzw. des Kraftfahrzeug-Schiebedaches, entsprechende aufaddierte Gesamt-Pulssignalzählwert.

Die Erfindung sowie weitere vorteilhafte Ausgestaltungen der Erfindung werden im folgenden anhand schematisch dargestellter Ausführungsbeispiele in der Zeichnung näher erläutert; darin zeigen:
- FIG 1: den schematischen Aufbau einer Vorrichtung zur inkremmentalen Ermittlung der tatsächlichen Drehrichtungsumkehr eines Drehantriebes unter Verwendung eines 10-poligen asymmetrischen Magnetrades als rotorseitiges Geberrad sowie mit einem statorseitigen Sensor in Form eines Hall-Elementes;
- FIG 2: die Polfolge bzw. zugehörige Pulssignalfolge zwischen zwei Referenzsignalen mit zwischenliegender Drehrichtungsumkehr des Geberrades sowie die zugehörige unkorrigierte sowie korrigierte Polung des zugehörigen Gesamt-Pulssignalzählwertes;
- FIG 3: die Polfolge bzw. Pulssignalfolge des asymmetrischen Geberrades gemäß FIG 1 bei gleichbleibender Drehrichtung.

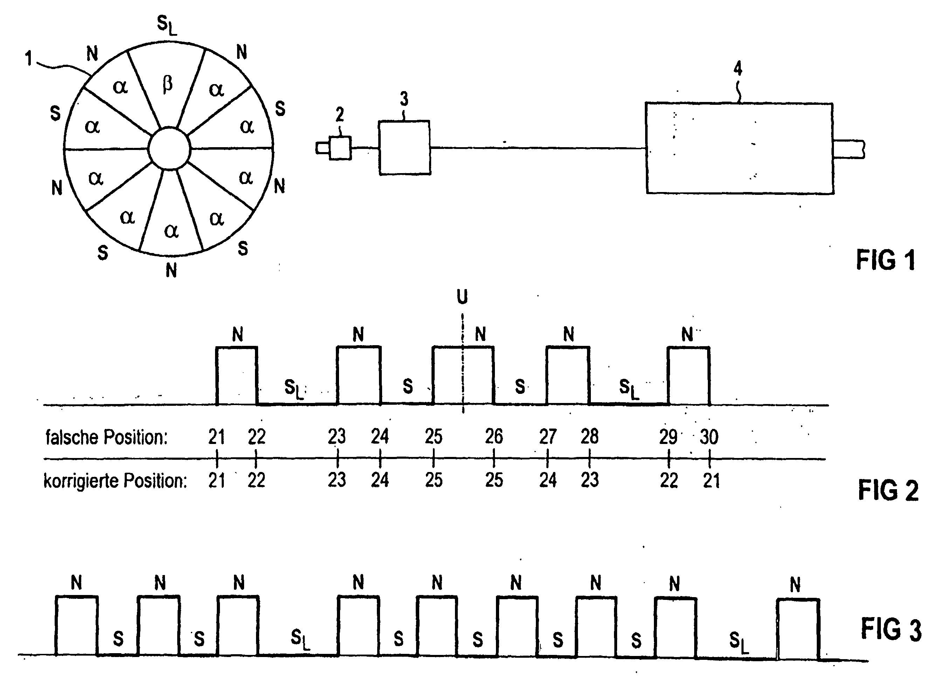

FIG 1 zeigt ein Inkremental-Gebersystem mit einem Geberrad 1 in Form eines mit fünf Polpaaren bzw. zehn Polen segmentartig magnetisierten Magnetrades und einem statorseitigen Sensor 2 in Form eines Hall-Elementes, dessen detektierte Pulse in einer Signalvorrichtung 3 zu Pulssignalen aufbereitet und in einer als Auswertevorrichtung 4 mitbenutzten Steuervorrichtung, z.B. zur Ansteuerung eines Fensterhebers bzw. eines Schiebedaches in einem Kraftfahrzeug, ausgewertet und zum Korrekturausgleich verarbeitet werden.

Das asymmetrische Geberrad 1 weist neun Pole N;S der Polbreite α und einen Pol S_{L} mit vergrößerter Polbreite β auf, der als Referenzsignal für die erfindungsgemäße Erkennung der tatsächlichen mechanischen Drehrichtungsumkehr vorgesehen ist. Selbstverständlich ist bei der Auslegung der Polbreiten α bzw. β darauf zu achten, daß auch im ungünstigsten Fall einer fertigungsbedingten Polbreitenschwankung die Polbreite β des als Referenz-Signalgeber vorgesehenen Poles S_{L} signifikant unterscheidbar ist von den übrigen zueinander gleichen Polbreiten α. Die mit dem Geberrad 1 an dem Sensor 2 vorbeirotierenden Pole N;S;S_{L} ergeben - wie in FIG 3 angedeutet - nach ihrer Aufbereitung in der Signalvorrichtung 3 im wesentlichen rechteckförmige, den Polen N;S;S_{L} zuzuordnende Pulssignale mit jeweils einer begrenzenden steigenden Flanke ("High") und einer begrenzenden fallenden Flanke ("Low").

Das Ausführungsbeispiel geht gemäß FIG 2 von einer Drehrichtungsumschaltung durch Relais-Umpolung der Speisespannung eines den Drehantrieb antreibenden Elektromotors bei einer Position des von dem Drehantrieb zu verstellenden Verstellteils, insbesondere dem Fenster eines Kraftfahrzeuges, bei einer Position aus, der der Pulssignalzählwert 21 zugeordnet ist. Die vorherige und augenblickliche Drehrichtung ist durch die Ansteuerung des Relais bzw. die Zuordnung der Pole der speisenden Gleichstromquelle an den Antriebsmotor des Drehantriebes definiert. Der Drehantrieb verläuft nun zunächst noch in der vorherigen Drehrichtung, jedoch mit verlangsamter Umdrehungsgeschwindigkeit, was durch die zunächst sich vergrößernde Pulslänge der Pole N;S_{L};N;S angedeutet ist. Während des dritten Poles N ist - wie durch die strichpunktierte Mittellinie als Umkehrpunkt U angedeutet - die tatsächliche Drehrichtungsumkehr angenommen, so daß anschließend die Pulslängen der weiteren Pole S;N;S_{L};N sich wieder verkürzen. Der Umkehrpunkt U der mechanischen Drehrichtungsumkehr ist somit erreicht, wenn die Pulssignallängen der vor der Drehzahlumschaltung gleichlangen Pole nach monotoner Zunahme wieder monoton abnehmen. Die Pulslänge des Poles, bei dem die Drehrichtung tatsächlich umkehrt, ist bei dieser Betrachtung unberücksichtigt zu lassen.

Durch Erfassen der Zahl der Pulssignale aufgrund der steigenden bzw. fallenden Flanken zwischen den zwei asymmetrischen, d.h. im vorliegenden Fall verlängerten Pole S_{L}, kann der Korrekturwert für die richtige Positionsdefinierung dadurch bestimmt werden, daß die Zahl der im statorseitigen Sensor 4 erfaßten Pulssignale zwischen den beiden in der einen bzw. anderen Drehrichtung nacheinander vorbeirotierenden Referenzsignale aufgrund der Pole S_{L} erfaßten Pulssignale, im vorliegenden Fall sieben Pulssignale vom Pulssignalzählwert 22 bis zum Pulssignalzählwert 29, vom dem bei Erreichen des Endwertes dieser Meßzeit, d.h. vom Pulssignalwert 29, abzuziehen sind, so daß sich als korrigierte Position für das von dem Drehantrieb bewegte Verstellteil der Pulssignalzählwert 22 ergibt.

Nach einer Ausgestaltung der Erfindung ist zur Vereinfachung der Messung vorgesehen, zwischen den beiden Zeitpunkten des Referenzsignals in Form des verlängerten Poles S_{L} nur die steigenden oder nur die fallenden Flanken zu zählen und als Korrekturwert dann die doppelte Zahl dieser gemessenen steigenden Flanken von dem Positionszählwert am Ende der Meßzeit zu subtrahieren.

## Patentansprüche

1. Verfahren zur inkrementalen Bestimmung der tatsächlichen Drehrichtungsumkehr eines nach vorhergehender Drehrichtungsumschaltung nachlaufenden Drehantriebes, insbesondere für Fensterheber- bzw. Schiebedachantriebe in einem Kraftfahrzeug,
- mit einer Folge von rotorseitigen drehzahlproportionalen Pulssignalen mit zwischenliegendem, davon unterschiedlichem Referenzsignal;
- mit einer statorseitigen Pulssignalzählung;
- mit einer Bestimmung der tatsächlichen Drehrichtungsumkehr nach einer Drehrichtungsumschaltung, insbesondere einer entsprechenden Umpolung eines elektrischen Drehantriebmotors, durch Berücksichtigung eines aus der Zählung der Pulssignale zwischen je einem Referenzsignal vor und nach der tatsächlichen, aufgrund eines Wechsels von einer monotonen Zunahme in eine monotone Abnahme der Pulssignallängen feststellbaren, Drehrichtungsumkehr nach einer Drehrichtungsumschaltung abgeleiteten Pulssignal-Korrekturwertes.

2. Verfahren nach Anspruch 1
- mit einer Folge von Pulssignalen jeweils konstanter Pulssignallänge und einem Referenzsignals mit dazu unterschiedlicher Pulssignallänge.

3. Verfahren nach Anspruch 1 und/oder 2
- mit Pulssignalen in Form von im wesentlichen rechteckigen Signalen mit jeweils einer begrenzenden steigenden Flanke ("High") und einer begrenzenden fallenden Flanke ("Low").

4. Verfahren nach zumindest einem der Ansprüche 1-3
- mit je einem Referenzsignal pro je einer Umdrehung des Drehantriebs bzw. eines proportionalen Drehimpulsgebers.

5. Verfahren nach zumindest einem der Ansprüche 1-4
- mit einer Bildung des Pulssignals-Korrekturwertes durch Zählen sowohl der steigenden Flanken ("High") als auch der fallenden Flanken ("Low") der Pulssignale zwischen dem ersten Referenzsignal nach der Drehrichtungsumschaltung jedoch vor der tatsächlichen Drehrichtungsumkehr und dem folgenden zweiten Referenzsignal nach der tatsächlichen Drehrichtungsumkehr;
- mit einer Definition des nach der Drehrichtungsumkehr zuzuordnenden tatsächlichen statorseitigen Pulssignalzählwertes durch Subtraktion des Pulssignal-Korrekturwertes von dem dem zweiten Referenzsignal entsprechenden Pulssignalzählwert.

6. Verfahren nach zumindest einem der Ansprüche 1-4
- mit einer Bildung des Pulssignal-Korrekturwertes durch Zählen nur der steigenden Flanken ("High") der Pulssignale bzw. nur der fallenden Flanken ("Low") der Pulssignale zwischen dem ersten Referenzsignal nach der Drehrichtungsumkehrschaltung jedoch vor der tatsächlichen Drehrichtungsumkehr und dem folgenden zweiten Referenzsignal nach der tatsächlichen Drehrichtungsumkehr;
- mit einer Definition des nach der Drehrichtungsumkehr zuzuordnenden tatsächlichen statorsseitigen Pulssignalzählwertes durch Subtraktion des doppelten Pulssignal-Korrekturwertes von dem dem zweiten Referenzsignal entsprechenden Pulssignalzählwert.

7. Vorrichtung zur Durchführung des Verfahrens nach zumindest einem der Ansprüche 1-6
- mit einem asymmetrischen rotorseitigen Geberrad (1) für die Folge der drehzahlproportionalen Pulsfolgen mit dem zwischenliegenden Referenzsignal;
- mit einem einzigen statorseitigen Sensor (2) zum Empfang der Signale des rotorseitigen Geberrades (1);
- mit einer Auswertevorrichtung (4) zur Bildung des Pulssignal-Korrekturwertes und Bestimmung des der tatsächlichen Drehrichtungsumkehr entsprechenden Pulssignalzählwertes.

8. Vorrichtung nach Anspruch 7
- mit einem Geberrad (1) in Form eines Magnetrades mit über den Umfang verteilten, insbesondere aufmagnetisierten, Magnet-Polen (N;S;S_{L});
- mit einem Referenz-Signalgeber in Form eines Poles (S_{L}) mit im Vergleich zur jeweiligen Polbreite (α) der übrigen Pole (N;S) unterscheidbarer, insbesondere kleinerer bzw. größerer Polbreite (β).

9. Vorrichtung nach Anspruch 8
- mit einem Geberrad (1) mit aufmagnetisierten Magnetpolen.

10. Vorrichtung nach zumindest einem der Ansprüche 7-9
- mit einem statorseitigen Sensor (2) in Form eines Hallelementes.

## Claims

1. Method for incremental determination of the actual rotation reversal of a rotary actuator following a previous switch in the rotational direction, in particular for window opening drives and sliding roof drives in a motor vehicle,
- with a sequence of rotor-side speed-proportional pulse signals with an intermediate reference signal differing therefrom;
- with stator-side counting of pulse signals;
- with determination of the actual rotation reversal following a switch in the rotational direction, in particular a corresponding polarity reversal of an electric rotary actuator, by taking account of a pulse signal correction value derived from counting the pulse signals between a reference signal in each case before and after the actual rotation reversal after a switch in rotational direction which can be ascertained on the basis of a change from a monotonic increase to a monotonic decrease in the pulse signal lengths.

2. Method according to Claim 1
- with a sequence of pulse signals of in each case constant pulse signal length and with a reference signal with a pulse signal length differing therefrom.

3. Method according to Claim 1 and/or 2
- with pulse signals in the form of essentially rectangular signals with in each case a limiting rising edge ("High") and a limiting trailing edge ("Low").

4. Method according to at least one of Claims 1-3
- with in each case a reference signal for each revolution of the rotary actuator or of a proportional rotary pulse encoder.

5. Method according to at least one of Claims 1-4
- with formation of the pulse signal correction value by counting both the rising edges ("High") and the trailing edges ("Low") of the pulse signals between the first reference signal after the switch of rotational direction but before the actual rotation reversal and the following second reference signal after the actual rotation reversal;
- with the actual stator-side pulse signal count value to be assigned after the rotation reversal being defined by subtracting the pulse signal correction value from the pulse signal count value corresponding to the second reference signal.

6. Method according to at least one of Claims 1-4
- with formation of the pulse signal correction value by counting only the rising edges ("High") of the pulse signals or only the trailing edges ("Low") of the pulse signals between the first reference signal after the switch of rotational direction but before the actual rotation reversal and the following second reference signal after the actual rotation reversal;
- with the actual stator-side pulse signal count value to be assigned after the rotation reversal being defined by subtracting double the pulse signal correction value from the pulse signal count value corresponding to the second reference signal.

7. Device for carrying out the method according to at least one of Claims 1-6
- with an asymmetric rotor-side encoder wheel (1) for the sequence of speed-proportional pulse sequences with the intermediate reference signal;
- with a single stator-side sensor (2) to receive the signals from the rotor-side encoder wheel (1);
- with an analysis device (4) to form the pulse signal correction value and determine the pulse signal correction value corresponding to the actual rotation reversal.

8. Device according to Claim 7
- with an encoder wheel (1) in the form of a magnet wheel with magnetic poles (N;S;S_{L}), in particular magnetised magnetic poles, distributed over the circumference;
- with a reference signal encoder in the form of a pole (S_{L}) with a differentiable, in particular smaller or larger, pole width (β) compared to the respective pole width (α) of the other poles (N;S).

9. Device according to Claim 8
- with an encoder wheel (1) with magnetised magnetic poles.

10. Device according to at least one of Claims 7-9
- with a stator-side sensor (2) in the form of a Hall element.

## Revendications

1. Procédé pour la détermination incrémentale du renversement effectif du sens de rotation d'un entraînement tournant qui continue à tourner après l'inversion électrique préalable du sens de rotation, en particulier pour l'entraînement de lève-glace ou de toits ouvrants dans un véhicule automobile comprenant
- une suite de signaux pulsés proportionnels à la vitesse de rotation, liés au rotor, qui comporte un signal de référence intercalé, différent de ces signaux ;
- un comptage de signaux pulsés liés au stator ;
- une détermination du renversement effectif du sens de rotation après une inversion électrique du sens de rotation, en particulier après un changement de pôles correspondant d'un moteur d'entraînement électrique, obtenue en faisant intervenir une valeur correctrice de signaux pulsés dérivée du comptage des signaux pulsés entre un signal de référence avant et après le renversement effectif du sens de rotation qui suit une inversion électrique du sens de rotation, qui peut être constaté sur la base du passage d'une croissance monotone à une décroissance monotone des longueurs des signaux pulsés.

2. Procédé selon la revendication 1 comprenant,
- une suite de signaux pulsés, chacun d'une longueur de signal pulsé constante et, un signal de référence ayant une longueur de signal pulsé différente.

3. Procédé selon la revendication 1et/ou 2 comprenant :
- des signaux pulsés présentant la forme de signaux sensiblement rectangulaires ayant chacun un flanc montant limite (« High ») et un flanc descendant limite (« Low »).

4. Procédé selon au moins une des revendications 1-3, comprenant
- un signal de référence par tour de l'entraînement tournant ou d'un émetteur d'impulsions de rotation proportionnel.

5. Procédé selon au moins une des revendications 1-4 comprenant
- une formation de la valeur correctrice des signaux pulsés par comptage aussi bien des flancs montants (« High ») que des flancs descendants (« Low ») des signaux pulsés entre le premier signal de référence qui suit l'inversion électrique du sens de rotation mais qui précède le renversement effectif du sens de rotation et le deuxième signal de référence suivant après le renversement effectif du sens de rotation ;
- une définition de l'état de compte effectif de signaux pulsés liés au stator qui doit être associé après le renversement du sens de rotation, effectuée en soustrayant la valeur correctrice de signaux pulsés de l'état de compte des signaux pulsés correspondant au deuxième signal de référence.

6. Procédé selon au moins une des revendications 1-4, comprenant :
- une formation de la valeur correctrice des signaux pulsés par comptage des seuls flancs montants (« High ») ou des seuls flancs descendants (« Low ») des signaux pulsés entre le premier signal de référence qui suit l'inversion électrique du sens de rotation mais qui précède le renversement effectif du sens de rotation et le deuxième signal de référence suivant après le renversement effectif du sens de rotation ;
- une définition de l'état de compte effectif de signaux pulsés liés au stator qui doit être associé après le renversement du sens de rotation, effectuée en soustrayant le double de la valeur correctrice de signaux pulsés de l'état de compte des signaux pulsés correspondant au deuxième signal de référence.

7. Dispositif pour la mise en oeuvre du procédé selon au moins une des revendications 1 - 6, comprenant :
- une roue émettrice asymétrique (1) liée au rotor pour la suite des suites d'impulsions proportionnelles à la vitesse de rotation comprenant le signal de référence intercalé ;
- un unique capteur (2) lié au stator, destiné à recevoir les signaux de la roue émettrice (1) ;
- un dispositif d'exploitation (4) destiné à former la valeur correctrice des signaux pulsés et à déterminer la valeur de comptage des signaux pulsés qui correspond au renversement effectif du sens de rotation.

8. Dispositif selon la revendication 7, comprenant
- une roue émettrice (1) formée d'une roue magnétique possédant des pôles magnétiques (N ; S ; S_{L}), répartis sur la circonférence, en particulier surmagnétisés ;
- un émetteur de signaux de référence formé d'un pôle (S_{L}) possédant une largeur de pôle (β) pouvant être différencié de la largeur de pôle (α) des autres pôles (N ; S), en particulier plus petite ou plus grande.

9. Dispositif selon la revendication 8, comprenant
- une roue émettrice (1) à pôles magnétiques surmagnétisés.

10. Dispositif selon au moins une des revendications 7 - 9, comprenant
- un capteur (2) lié au stator, formé d'un élément à effet Hall.
